# EUROPEAN PATENT SPECIFICATION

(11) **EP 1 544 659 B1**
(45) Date of publication and mention of the grant of the patent: **05.03.2008**
(21) Application number: 03029221.3
(22) Date of filing: 18.12.2003
(51) Int. Cl.: G02B 27/01, B60K 35/00, H04N 5/74

(54) **Projecting system and navigation device for a vehicle**
Projektions- und Navigationssystem für ein Fahrzeug
Système de projection et de navigation pour un véhicule

(43) Date of publication of application: 22.06.2005
(73) Proprietor: Harman Becker Automotive Systems GmbH, 76307 Karlsbad (DE)
(72) Inventor: Wietzke, Joachim, 76228 Karlsruhe (DE)
(74) Representative: Bertsch, Florian Oliver

(56) References cited:
- EP-A- 1 195 637
- DE-C- 10 135 342
- US-A- 5 461 361
- PATENT ABSTRACTS OF JAPAN vol. 2000, no. 08, 6 October 2000 (2000-10-06) -& JP 2000 142260 A (MATSUSHITA ELECTRIC IND CO LTD), 23 May 2000 (2000-05-23)
- PATENT ABSTRACTS OF JAPAN vol. 2003, no. 01, 14 January 2003 (2003-01-14) -& JP 2002 264693 A (TERAKADO MIYOKO), 18 September 2002 (2002-09-18)

## Description

The invention relates to a projecting system for projecting video data in a vehicle and to a navigation system comprising the projection system.

### Related art

Recently, displaying video data comprising video information in a vehicle has become an important factor in nowadays vehicles. In modern vehicles different information systems are present which provide the passengers of the vehicle with different kinds of information, be it information from a navigation device or be it information from an entertainment system or information about the driving state of the vehicle. Navigation systems normally comprise displays which are comprised on or in the dashboard of the vehicles. The dashboard of the vehicle, however, is a very sensitive space, since, first of all, many other devices have to be integrated into the dashboard (speedometer, airbags, air ventilation, etc.), and secondly, the upper part of the dashboard should be free of any device, since any obstacle projecting out of the dashboard may be dangerous to the passengers in the front, in the case of an accident.

Furthermore, the display units in vehicles, which are often TFT displays or plasma displays strongly influence the total costs of any system providing the user of the vehicle with video information. Therefore, there exists the need for providing an easy and low-cost projecting system projecting video data in a vehicle.

DE 102 15 893 C1 discloses a projecting system for projecting information and entertaining data in a vehicle on any interior surface of the vehicle. For the generation of the video data a laser projector is used. For the projection of two-dimensional image data by using a laser, a highly sophisticated apparatus is necessary, which is very expensive. Furthermore, for the generation of two-dimensional video or image data, pivoting or rotating mechanical devices (e.g. mirrors or relating wheels for generating the different colours) are needed for generating the different lines and columns of the image and/or the different colours. In vehicles, however, existing vibrations due to the underground on which the vehicle drives and due to the engine of the vehicle make it very difficult to control the exact positioning of a pivoting or rotating device. Consequently, the generation of well-defined, clear images is difficult.

Therefore, there is a need for providing an easy and low-cost projecting system which can be used for projecting any video data in a vehicle.

### Summary of the invention

This need is met by a projecting system according to claim 1. In the dependent claims preferred embodiments of the invention are described.

According to a first aspect of the invention the projecting system for providing video data in a vehicle comprises a video projector generating the video data, comprising control means for generating an optical video information and a light source for generating the light needed to display the video data. The projecting system further comprises a projecting surface provided on an interior component of the vehicle for displaying the video data. The light source of the video projector is an incoherent light source and the video projector comprises focussing means for focussing the light emitted by the incoherent light source. The projecting system of the invention provides a simple and low-cost possibility of projecting video data. First of all, the video projector uses a standard light source, a highly sophisticated laser device for providing a two-dimensional image not being necessary. Furthermore, the projector does not necessarily comprise rotating or pivoting light reflecting components, so that it can be used also in environments comprising many vibrations. According to a second aspect of the invention, the projecting surface is part of an interior component of the vehicle, so that there is no need for an expensive extra display unit.

According to an example alternative to the invention, the projecting surface is provided on the dashboard of the vehicle. The projecting surface may be provided on a surface of the dashboard. This surface of the dashboard may be situated in a place that is easily visible for the driver and/or for the other passengers in the front seats. The projecting surface has enough reflectivity to reflect the light emitted from the video generator, so that the user of the projecting system can identify the image projected onto the projecting surface in the vehicle. Instead of providing the projecting surface on the dashboard of the vehicle, any other component on the dashboard or near the dashboard can be used as a projecting surface, provided that its reflectivity is high enough to reflect the light from the video projector. The projecting surface can, e.g., be provided on the center console or in any other panelling parts on the seat of the vehicle.

According to a preferred embodiment of the invention the video projector is provided between the rear-view mirror and the windshield of the vehicle. In this place, the video projector does not obstruct the view for the driver of the vehicle. It should be understood that any other place for the video projector can be selected, which does not obstruct the view. The video projector could also be installed on the inside roof lining of the vehicle. In vehicles the inside roof lining often comprises a housing in which lamps for the passengers in the back are installed. The video projector could also be provided in this housing attached to the inside roof lining.

According to a further embodiment the video projector may be a TFT LCD projector or a polysilicon LCD projector. In the TFT-LCD technique the pixels provided on the surface of the liquid crystal display comprise three transistors for the colours red, green and blue. Furthermore, video projectors exist which use three mono-TFTs, one for each colour (red, green, blue). After having passed the three transistors, the light is brought together. Furthermore, any other kind of video projector can be used, e.g. a D-ILA (Direct Drive Image Light Amplifier). Video projectors are known in the art, so that a person skilled in the art can choose the video projector which best corresponds to the demands of the user. The TFT-LCD projectors have a very simple construction, the polysilicon LCD video projector is the projecting system which is used in the most current applications.

According to an example alternative to the invention, the projecting surface is a surface layer of the interior component comprising a light reflecting material. The projecting surface can be incorporated into the surface of the interior component, e.g. the dashboard. Dashboards of vehicles are typically made of foamed plastic. The surface layer of this foamed plastic can be coated with a light-reflecting area. Furthermore, the projecting surface of the interior component could be coloured with a light-reflecting colour, e.g. white colour. It should be understood that the projecting surface will be chosen in accordance with the video projector used for generating the video data and its luminance characteristics.

According to another example alternative to the invention, the projecting surface could be a flexible light reflecting film which is fixed on the dashboard. This flexible light reflecting film could be the film that is normally used for projecting slides in a slide-show. These reflecting films are cheap materials and can easily be fixed to the dashboard or any other component of the vehicle.

Furthermore, the projecting surface may be provided in a recess of the interior component of the vehicle, the recess being covered by a removable cover. When the projecting system is not in use, the projecting surface can be hidden behind the removable cover. This also leads to a better appearance of the surface of the interior component of the vehicle. The removable cover can be made of the same material as the surface of the interior component. In the case of a dashboard, the removable cover may be made of foamed plastic which may slide over the projecting surface. The cover may also help to avoid sunlight reflections due to the projecting surface, when the latter is not in use.

In most of the cases, the projecting surface is a non-flat surface and will probably be rounded to some extent. In the case of a dashboard, the projecting surface may have a slightly convex shape. In order to correct the distortions resulting from projecting the video data on a non-flat projecting surface, the projecting system may further comprise correcting means. If the video projector is arranged movably or pivotably in the vehicle, so that different projecting surfaces can be reached, a recording means may be provided for recording the shape of the projecting surface and for transferring the data to the correcting means, so that the correcting means can correct the video data in accordance with the selected surface.

The invention further relates to a navigation device comprising a projecting system as mentioned above. In navigation systems displaying map data together with an actual position or displaying a route to a predetermined destination is an essential feature, so that the projecting system can be used in combination with navigation systems.

Other objects, features and advantages of the invention will become apparent in the course of the following description referring to the accompanying drawings.

### Drawings

Figure 1 is a schematic front elevation view of a projecting system in a vehicle;
Figure 2 is a side elevation view of the projecting system of Fig. 1;
Figure 3 is a more detailed view of the projecting system with a video projector; and
Figure 4a to 4f are different side elevation views of projecting surfaces incorporated into an interior component of the vehicle.

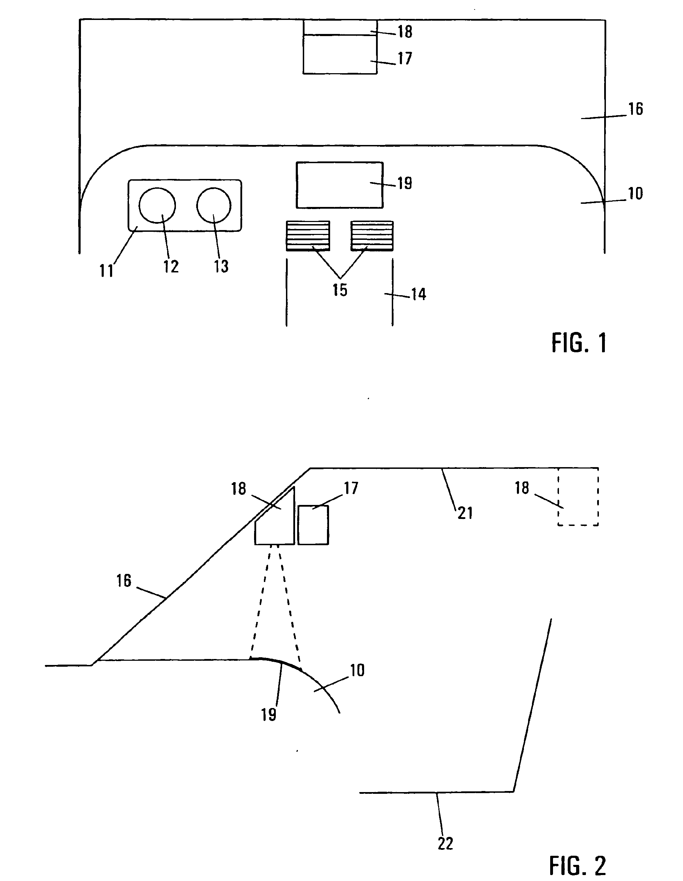

In Fig. 1 the inside of a vehicle (not shown) as seen by the driver is schematically shown. A dashboard 10 of the vehicle comprises a display unit 11 which comprises, inter alia, a speedometer 12 and/or a tachometer 13. As a matter of course, the dashboard comprises many other components which - for the sake of clarity - are not shown. Furthermore, the center console 14 of the vehicle is shown. Above the center console 14 ventilation openings 15 may be provided. On the upper part of the windshield 16 the rear-view mirror 17 is provided. Behind the rear-view mirror 17 a video projector 18 is installed for projecting video data on a projecting surface 19. The projecting surface 19 can be used for displaying any kind of video data. The video projector 18 which generates the video data may be used for displaying any kind of information such as road map data showing a road map and/or an actual vehicle position in a navigation system. The video data may also be used for displaying any information necessary to control different features of the vehicle (status reports of different control units of the vehicle, information of an audio system (not shown) of the vehicle, etc.). The projecting surface 19 is incorporated into the dashboard 10 and is made of a light-reflecting material or comprises a light reflecting material, so that the light emitted from the projector 18 is reflected from the surface 19 and is, therefore, visible for the driver. The part of the dashboard used as a projecting surface could also be coloured with a light colour, the light colour having good light reflecting properties.

The projecting surface 19 is provided above the central console 14. However, the projecting surface 19 may be provided anywhere where the driver is capable of recognizing the projecting surface 19 and the information displayed thereon.

The projecting surface 19 may also be provided on the center console 14, or may also be situated in a position that is used for the display unit 11 shown in Fig. 1.

In Fig. 2 a side elevation view of the projecting system is shown. As can be seen, the video projector 18 is installed between the windshield 16 and the rear-view mirror 17. In this position the projector 18 does not obstruct the view of the driver. The projecting surface 19 is provided on the surface of the dashboard 10. The projecting surface 19 is a non-planar surface and follows the shape of the dashboard. The video projector 18 may also be installed on the inside roof lining 21 of the vehicle in a position behind or directly above the front seat 22. This position of the projector 18 is shown in dashed lines. In this case, the projecting surface 19 can be provided at the shown position, but it may also be situated in a position on the dashboard which is closer to the front seat 22, i.e. shifted to the right in the Fig. 2.

If the projector 18 is situated in the middle between the two front seats, the projecting surface may also be provided on the center console 14. If the projecting surface 19 is shifted to the right and faces the front seat 22 and not the inside roof lining 22, the projecting surface comprising light reflecting material will reflect less daylight or sunshine coming through the windshield 16 and will therefore less disturb the driver who could be bothered by the sunlight reflecting from the projecting surface 19.

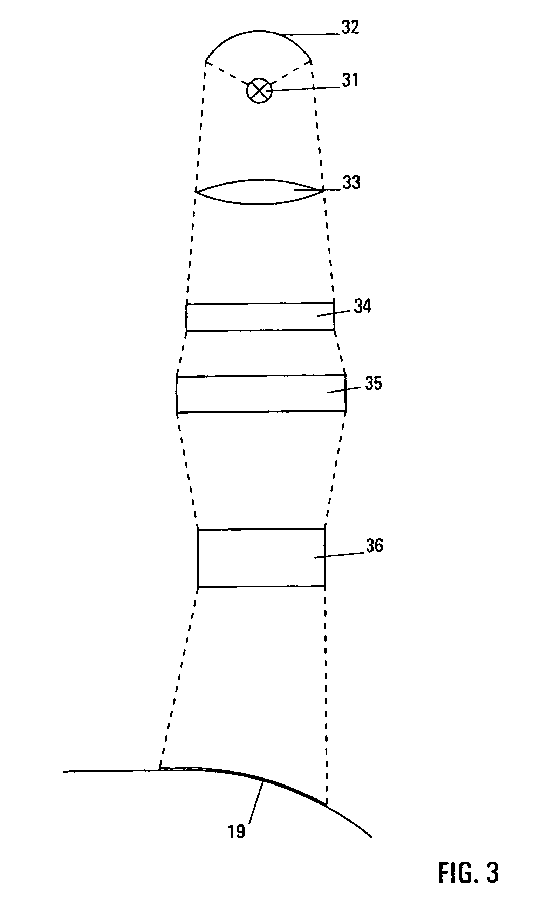

In Fig. 3 one embodiment of a video projector is shown in more detail. The video projector comprises a lamp 31 emitting incoherent light. The emitted light is preferably white light, but the spectral composition of the emitted light may also be chosen according to the circumstances in the vehicle (e.g. depending on the physical properties and colour of the dashboard). This light is reflected by a mirror 32 and directed to a first condenser lens 33 and to a further lens 34, which in the present case may be a Fresnel lens. The light passing the lens 34 is directed to TFT (Thin Film Transistor) LCD (Liquid Crystal Display) 35. These TFT LCD display systems used in video projectors are known in the art and are not explained in detail. The light having passed the display unit 35 then passes through a lens system or objective 36. The lens system 36 will focus the light in such a way that the information comprised in the video data is sharply defined on the projecting surface 19.

In Figure 3 only the optical units of a video projector are shown. It should be understood that the video projector will comprise all the devices incorporated in a nowadays video projector, e.g. a control means for generating the optical video information for controlling the TFT LCD display 35. It should be understood that the video projector could also be a video projector based on the polysilicon LCD technique comprising a lens array, dichroic mirrors and normal mirrors and a prism. These polysilicon LCD video projectors are also known in the art, so that they are not explained in detail.

The video projector installed in the vehicle may, however, differ from nowadays video projector systems in such a way that the video projector need not necessarily comprise a cooling system, such as a ventilation system, for dissipating the heat generated by the lamp 31. This is due to the fact that a distance between the video projector 18 and the surface 19 will normally be less than 1 m, so that the used light source need not be as powerful as in video projectors used for displaying video data on large projecting surfaces in rooms.

Every type of video projector can be used. However, when choosing the video projector it should be considered that the video projector does not comprise rotating or pivoting mirrors needed to generate the two-dimensional video images, as it is the case in laser projectors. In the environment of a vehicle, these projectors would not produce well-defined images, since the environment in a vehicle comprises many vibrations. These vibrations would destroy the accuracy of a pivoting or rotating angle needed to produce a two-dimensional image, so that in a preferred embodiment video projectors will be used which comprise no rotating or pivoting optical devices. The lens system 36 may further comprise correcting means for correcting the distortion resulting from projecting the video data on the non-flat projecting surface 19. These correcting means may comprise different lenses in order to focus the light on the surface 19. In another embodiment the correcting means may comprise electronic features used to correct the distortion.

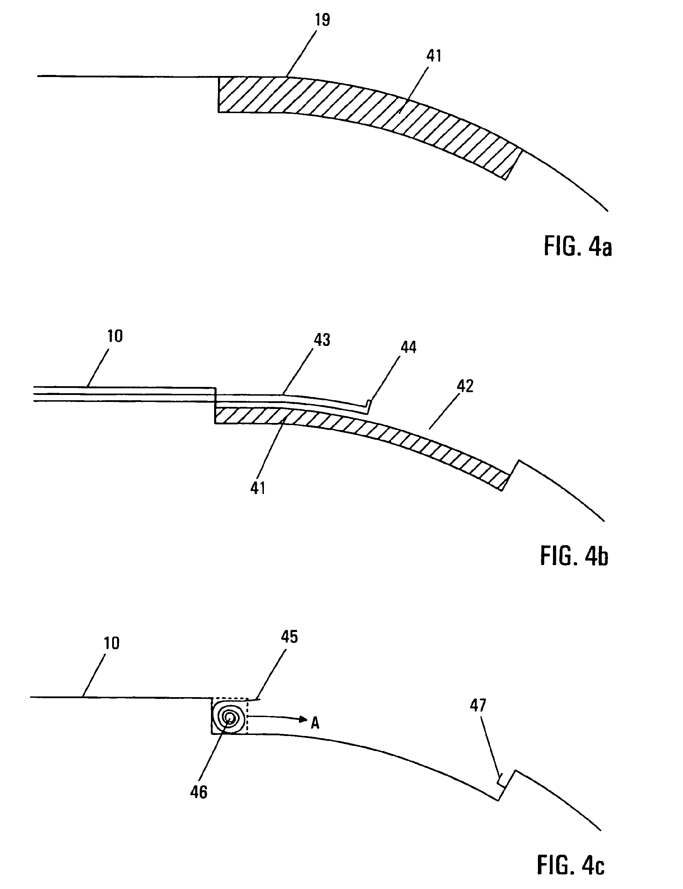

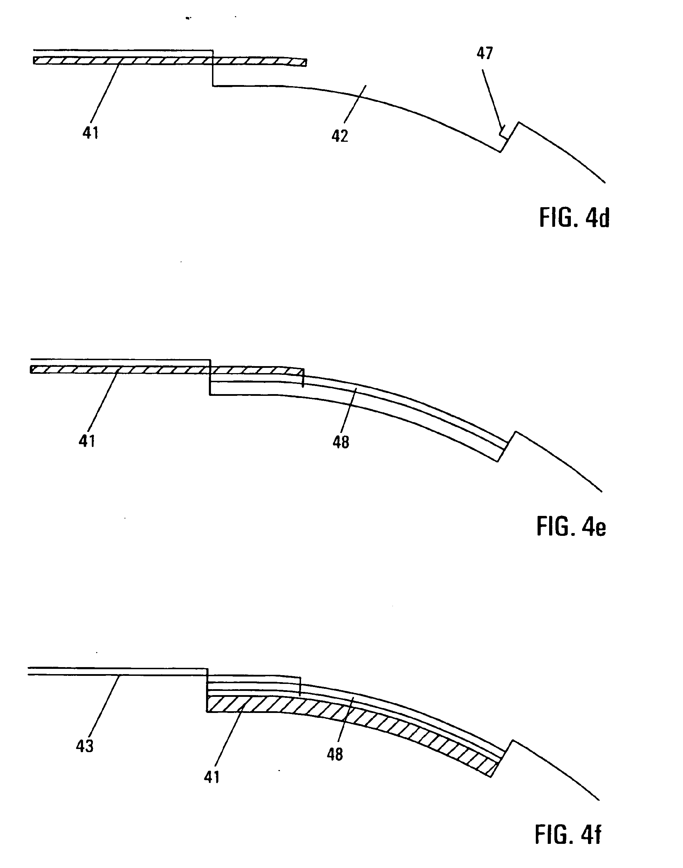

In Fig. 4 the projecting surface in its position on the interior component, e.g. the dashboard 10, is shown in more detail. As shown in Fig. 4a in alternative to the invention the projecting surface 19 comprises a surface layer 41 comprising light reflecting material. In the embodiments of Figures 4a to 4f the projecting surface is shown as the hatched area, so that the projecting surface can be distinguished from the other shown components more easily.

As can be seen in Fig. 4b in alternative to the invention the surface layer 41 may also be provided in a recess 42 of the dashboard 10. The recess may be provided in order to enhance the image quality, so that light not originating from the video projector 18 will less interfere with the light originating from the projector. Furthermore, a removable cover 43 may be provided. This removable cover 43 may be provided for optical reasons in order to hide the projecting surface when not in use, and the cover 43 will help to avoid that daylight or sunlight coming from the outside will be reflected on the surface 41 and will disturb the driver. It should be understood that the position of the projecting surface 19, will be determined in such a way that light reflections not originating from the video projector will be minimized. The removable cover 43 may be arranged slidably in the dashboard and can either be operated manually by a projection 44, or may be controlled by an electronic motor (not shown) or any other control device usable for slidably moving the cover.

As shown in Fig. 4c the projecting surface according to the invention is a flexible light-reflecting film 45 which may be rolled up on a shaft 46. This light-reflective film is known in the art and is used as a projecting surface for viewing colour slides. When in use, the film 45 may be fixed on a fixing device 47 provided in the recess. The shaft 46 with the rolled-up film 45 may also be arranged behind the dashboard as shown by the dashed lines. In this case only the end of the film 45 is shown in the recess. For use, the film 45 has to be pulled in the direction of the arrow A shown in Fig. 4c and fixed on the fixing device 47.

As shown in Fig. 4d in alternative to the invention the surface layer 41 may also be slidably arranged in interior component or dashboard 10. When the projecting system is in use, the layer 41 is fixed on a suitable fixing device 47 and covers the recess 42. It should be understood that in this embodiment, the recess is not necessary. The surface layer 41 may also be moved on the dashboard 10 without the recess 42 being present. As shown in Fig. 4e in alternative to the invention the surface layer may be slided along tracks 48 arranged, e.g., at both side walls of the recess in order to guide the movement of the surface layer. In Fig. 4f in alternative to the invention the surface layer 41 is provided on the bottom of the recess 42 and the removable cover 43 is slidably arranged on the tracks 48.

It should be understood that many different geometrical arrangements of the projecting surface 19 are possible. The person skilled in the art will choose the position and the arrangement of the projecting surface 19 in accordance with the geometrical facts of the interior components of the dashboard and the position of the video projector and the driver. The projecting surface and the position of the video projector 18 will be chosen in such a way that the displayed information can easily be seen by the driver.

The present invention provides a simple and cheap projecting system to be used in vehicles. With the present protecting system large screens having a diameter of several inches, e.g. 6 to 4 inches, are not necessary any more. The display techniques used in the video projector of the invention are much smaller and the video data will be projected on a larger scale by using a lens system. Due to this fact the total costs of a projecting system for displaying information to the driver of a vehicle are minimized.

## Claims

1. Projecting system for projecting video data in a vehicle, comprising:
- a video projector (18) generating the video data, comprising control means for generating an optical video information and a light source (31) for generating the light needed to display the video data, the light source (31) of the video projector (19) being an incoherent light source, and the video projector comprises focussing means (33, 34, 36) for focussing the light emitted from the light source (31),
- a vehicle dashboard (10) provided with a recess (42),
- a projecting surface (19) provided in said recess (42) on an interior component (10) of the vehicle dashboard for displaying the video data,
wherein the projecting surface (19) comprises light reflecting material, **characterized in that** the projecting surface (19) is a flexible projecting surface and a shaft (46) is provided in said recess (42) for rolling up said projecting surface when not in use.

2. Projecting system according to claim 1, wherein the video projector (18) is provided between the rearview mirror (17) and the windshield (16) of the vehicle.

3. Projecting system according to any of the preceding claims, **characterized in that** the video projector (19) is a TFT LCD projector or a polysilicon LCD projector.

4. Projecting system according to any of the preceding claims, wherein the flexible projecting surface is a light reflecting film (45).

5. Projecting system according to any of the preceding claims, further comprising correcting means for correcting the distortion resulting from projecting the video data on a non flat projecting surface.

6. Navigation system comprising a projecting system according to any of the preceding claims.

## Patentansprüche

1. Projektionssystem zum Projizieren von Videodaten in einem Fahrzeug, umfassend:
- einen Videoprojektor (18), welcher die Videodaten erzeugt und welcher ein Steuermittel zum Erzeugen einer optischen Videoinformation und eine Lichtquelle (31) zum Erzeugen des Lichts, welches zum Anzeigen der Videodaten benötigt wird, umfasst, wobei die Lichtquelle (31) des Videoprojektors (18) eine inkohärente Lichtquelle ist und der Videoprojektor Fokussierungsmittel (33, 34, 36) zum Fokussieren des von der Lichtquelle (31) ausgesandten Lichts umfasst,
- ein Fahrzeugarmaturenbrett (10), welches mit einer Aussparung (42) versehen ist,
- eine Projektionsfläche (19), welche in der Aussparung (42) auf einer Innenkomponente (10) des Fahrzeugarmaturenbretts zum Anzeigen der Videodaten vorgesehen ist,
wobei die Projektionsfläche (19) ein lichtreflektierendes Material umfasst, **dadurch gekennzeichnet, dass** die Projektionsfläche (19) eine flexible Projektionsfläche ist, und dass eine Welle (46) in der Aussparung (42) zum Aufrollen der Projektionsfläche vorgesehen ist, wenn sie nicht verwendet wird.

2. Projektionssystem nach Anspruch 1, wobei der Videoprojektor (18) zwischen dem Rückspiegel (17) und der Windschutzscheibe (16) des Fahrzeugs vorgesehen ist.

3. Projektionssystem nach einem der vorhergehenden Ansprüche, **dadurch gekennzeichnet, dass** der Videoprojektor (19) ein TFT-LCD-Projektor oder ein Polysilizium-LCD-Projektor ist.

4. Projektionssystem nach einem der vorhergehenden Ansprüche, wobei die flexible Projektionsfläche eine lichtreflektierende Folie (45) ist.

5. Projektionssystem nach einem der vorhergehenden Ansprüche, welches ferner Korrekturmittel zum Korrigieren der Verzerrung umfasst, welche aus einer Projektion der Videodaten auf einer nicht flachen Projektionsfläche resultiert.

6. Navigationssystem, welches ein Projektionssystem nach einem der vorhergehenden Ansprüche umfasst.

## Revendications

1. Système de projection pour projeter des données vidéo dans un véhicule, comprenant :
- un projecteur vidéo (18) générant les données vidéo, qui comprend des moyens de commande pour générer des informations vidéo optiques ainsi qu'une source de lumière (31) pour générer la lumière nécessaire pour afficher les données vidéo, la source de lumière (31) du projecteur vidéo (19) étant une source de lumière incohérente, et le projecteur vidéo comprenant des moyens de focalisation (33, 34, 36) pour focaliser la lumière émise à partir de la source de lumière (31),
- un tableau de bord de véhicule (10) comprenant un renfoncement (42),
- une surface de projection (19) prévue à l'intérieur dudit renfoncement (42) sur un composant interne (10) du tableau de bord du véhicule pour afficher les données vidéo,
dans lequel, la surface de projection (19) comprend un matériau réfléchissant la lumière, **caractérisé en ce que** la surface de projection (19) est une surface de projection souple, et une tige (46) est prévue à l'intérieur dudit renfoncement (42) pour permettre à ladite surface de projection de s'enrouler quand elle n'est pas en service.

2. Système de projection selon la revendication 1, dans lequel le projecteur vidéo (18) est disposé entre le rétroviseur intérieur (17) et le pare-brise (16) du véhicule.

3. Système de projection selon l'une quelconque des revendications précédentes, **caractérisé en ce que** le projecteur vidéo (19) est un projecteur LCD TFT ou un projecteur LCD polysilicone.

4. Système de projection selon l'une quelconque des revendications précédentes, dans lequel la surface de projection souple est un film réfléchissant la lumière (45).

5. Système de projection selon l'une quelconque des revendications précédentes, comprenant par ailleurs des moyens de correction pour corriger la déformation résultant de la projection des données vidéo sur une surface de projection qui n'est pas plane.

6. Système de navigation comprenant un système de projection selon l'une quelconque des revendications précédentes.
